# EUROPÄISCHE PATENTANMELDUNG

(11) **EP 2 157 054 A2**
(43) Veröffentlichungstag der Anmeldung: **24.02.2010**
(21) Anmeldenummer: 09450137.6
(22) Anmeldetag: 29.07.2009
(51) Int. Cl.: C02F 1/28, B01J 20/06, B01J 20/12, B01J 20/32, C02F 101/20

(54) **Filtersubstrat**

(30) Priorität: 12.08.2008 AT 12592008
(71) Anmelder: Leube Industrieverwaltung Ges. m.b.H, 5083 St. Leonhard (AT); Universität für Bodenkultur Wien, 1180 Wien (AT)
(72) Erfinder: Schweiger, Peter, 1040 Wien (AT); Wieshammer-Zivkovic, Michael, 3452 Heiligeneich (AT); Wenzel, Walter, 1180 Wien (AT)
(74) Vertreter: Gibler & Poth Patentanwälte OEG

(57) **Zusammenfassung**

Bei einem Filtersubstrat (1) zur Sorption von in Wasser gelösten Schwermetallen, aus feinkörnigem Material, wird zur Verwendung für die oberste Bodenschicht im Bereich einer Verkehrsfläche vorgeschlagen, dass wenigstens 60 Masseprozent des feinkörnigen Materials Schluffkörner sind, und dass zumindest ein Teil der Schluffkörner wenigstens bereichsweise an deren Oberfläche mit Metall-Sauerstoff-Verbindungen angereichert ist.

## Beschreibung

Filtersubstrat zur Sorption von in Wasser gelösten Schwermetallen sind bekannt. Dieses Filtersubstrat wird in von Wasser durchspülten Filtern verwendet und besteht aus sandigem Material, also aus einer Vielzahl feiner Sandkörner. Die feinen Sandkörner sind oberflächig mit Metall-Sauerstoff-Verbindungen angereichert, welche die gelösten Schwermetalle adsorbieren und derart die Immobilisierung der im Wasser gelösten Schwermetalle bewirken.

Nachteilig dabei ist, dass dieses Filtersubstrat nicht geeignet für die oberste Bodenschicht im Bereich einer Verkehrsfläche ist.

Aufgabe der Erfindung ist es daher ein Filtersubstrat der eingangs genannten Art anzugeben, mit welchem der genannte Nachteil vermieden werden kann und welches bei einer Mischung mit einem herkömmlichen Boden einen Filterboden zur Verwendung für die oberste Bodenschicht im Bereich einer Verkehrsfläche ausbilden kann.

Erfindungsgemäß wird dies durch die Merkmale des Patentanspruches 1 erreicht.

Dadurch ergibt sich der Vorteil, dass das Filtersubstrat einfach in einem terrestrischen Boden, einem semiterrestrischen Boden, einem semisubhydrischen Boden, einem subhydrischen Boden und/oder einem Moorboden eingebracht und mit diesem vermischt werden kann, womit ein Filterboden ausgebildet ist. Vorteilhafterweise ist dabei die Masse des Filtersubstrats im Verhältnis zur Masse des Filterbodens gering, insbesondere zwischen 1 % und 20%. Dadurch kann der Filterboden einerseits die Sorption von in Wasser gelösten Schwermetallen gewährleisten und andererseits ähnliche sonstige Eigenschaften, wie eine im Bereich einer Verkehrsfläche ausgebildete herkömmliche Bodenschicht aufweisen.

Durch die geringe Masse des Filtersubstrats im Verhältnis zur Masse des Filterbodens kann der Filterboden preisgünstig ausgebildet sein. Insbesondere kann das Filtersubstrat vorgefertigt werden und Vor-Ort mit der Vor-Ort entnommenen Bodenschicht vermischt werden und aufgeschüttet werden. Dadurch können Transportkosten des Filterbodens vermieden werden, wodurch auch bei großflächigen Arealen, beispielsweise Parkplätze, Fahrbahnränder, Sportplätze oder Stadienböden, eine oberste Bodenschicht aus dem Filterboden vorgesehen sein kann. Ebenso kann der Filterboden unterhalb einer Asphaltschicht, beispielsweise einer Straße, ausgebildet sein, wobei das durch den Asphalt durchsickernde Wasser auch durch den Filterboden durchsickert und dabei die Sorption von in Wasser, insbesondere in Regenwasser, gelösten Schwermetallen bewirkt ist.

Die Erfindung betrifft auch einen Filterboden gemäß dem Oberbegriff des Patentanspruches 9.

Aufgabe der Erfindung ist es einen Filterboden der genannten Art anzugeben, mit welchem der eingangs genannte Nachteil vermieden werden kann und mit welchem eine oberste Bodenschicht im Bereich einer Verkehrsfläche ausgebildet werden kann.

Erfindungsgemäß wird dies durch die Merkmale des Patentanspruches 9 erreicht.

Vorteilhaft dabei ist, dass das von oben in Filterboden fließende Wasser, insbesondere Regenwasser, mit ähnlicher Sickergeschwindigkeit versickern kann, als es in einer herkömmlichen Bodenschicht versickert. Dadurch kann das Wasser im Filterboden im Wesentlichen genauso schnell versickern als in einer dazu angrenzenden herkömmlichen Bodenschicht. Wasserlachen auf der Oberfläche des Filterbodens, ein Umfließen des Wassers um den Filterboden herum, sowie ein zu schnelles Durchfließen des Wassers durch den Filterboden kann derart verhindert werden. Dadurch können die im Wasser befindlichen Schwermetalle besonders zuverlässig immobilisiert werden. Das aus dem Filterboden - nach dem Durchsickern dieses - Wasser, welches in diesem Zusammenhang als gefiltertes Wasser oder als Sickerwasser bezeichnet werden kann, weist dabei eine geringe Belastung mit Schwermetallen auf.

Die Erfindung betrifft auch ein Verfahren zur Herstellung eines Filterbodens gemäß dem Oberbegriff des Patentanspruchs 11.

Aufgabe der Erfindung ist es ein Verfahren der genannten Art anzugeben, mit welchem der eingangs genannte Nachteil vermieden werden kann und mit welchem eine oberste Bodenschicht im Bereich einer Verkehrsfläche ausgebildet werden kann.

Erfindungsgemäß wird dies durch die Merkmale des Patentanspruches 11 erreicht.

Vorteilhaft dabei ist, dass der Filterboden einfach und kostengünstig sowie insbesondere Vor-Ort hergestellt werden kann.

Die Erfindung betrifft auch eine Verwendung des Filtersubstrats und/oder des Filterbodens.

Aufgabe der Verwendung ist es den eingangs genannten Nachteil zu vermeiden, welches erfindungsgemäß durch die Merkmale des Patentanspruches 14 erreicht wird.

Die Unteransprüche, welche ebenso wie die Patentansprüche 1 und 9 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 das Filtersubstrat sowie ein erstes Verfahren einer Herstellung des Filtersubstrats;
Fig. 2 ein bevorzugtes Verfahren einer Herstellung des Filterbodens;
Fig. 3 die Verwendung des Filtersubstrats und des Filterbodens im Bereich einer Verkehrsfläche, welche als Fahrbahn ausgebildet ist; und
Fig. 4 die Verwendung des Filtersubstrats und des Filterbodens im Bereich einer Verkehrsfläche.

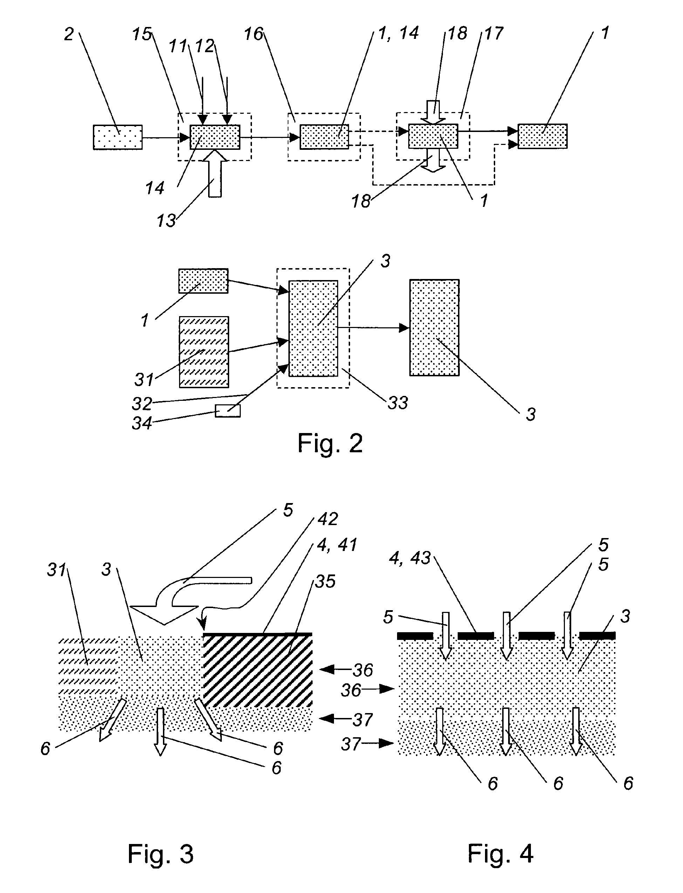

Die Fig. 1 und 2 zeigen ein Filtersubstrat 1 zur Sorption von in Wasser gelösten Schwermetallen, aus feinkörnigem Material, wobei vorgesehen ist, dass wenigstens 60 Masseprozent des feinkörnigen Materials Schluffkörner sind, und dass zumindest ein Teil der Schluffkörner wenigstens bereichsweise an deren Oberfläche mit Metall-Sauerstoff-Verbindungen angereichert ist.

Feinkörniges Material ist in diesem Zusammenhang ein Material umfassend, insbesondere im Wesentlichen bestehend aus, einer Vielzahl kleiner Körner gleicher oder verschiedener Materialien und/oder Mineralien. Das feinkörnige Material umfasst dabei Körner, welche gemäß der Korngrößenklassifikation eine Korngröße mit einem Äquivalentdurchmesser zwischen 0,002mm und 0,063mm aufweisen, und welche dabei als Schluffkörner bezeichnet werden können. Des weiteren kann das feinkörnige Material bevorzugt Tonkörner, also Körner mit Korngrößen eines Äquivalentdurchmessers unter 0,002mm, und/oder Sandkörner, also Körner mit Korngrößen eines Äquivalentdurchmessers zwischen 0,063mm und 2mm, umfassen. Natürlich vorkommendes feinkörniges Material sind z.B. Tonerde, Sand, lehmiger Sand, Lehm, Schluff, Humusböden und/oder Waldböden, sowie Mischungen dieser Böden. Das feinkörnige Material kann darüber hinaus auch Körner und/oder Bestandteile mit größerem Äquivalentdurchmesser umfassen, beispielsweise organisches Material in der Art von tierischen Lebewesen, Teile derer, Pflanzen und/oder Pflanzenteilen. Der Äquivalentdurchmesser des Korns und/oder des organischen Materials entspricht dabei dem Durchmesser einer Kugel, welche ein gleiches Volumen wie dieses Korn und/oder dieses organische Material aufweist.

Die Metall-Sauerstoff-Verbindungen weisen pro Verbindung zumindest ein Sauerstoffatom und zumindest ein Metallatom auf.

Metall-Sauerstoff-Verbindungen können in diesem Zusammenhang insbesondere Metall-Oxide oder Metall-Hydroxide sein, wobei die Metall-Oxide und die Metall-Hydroxide gleichzeitig im Filtersubstrat ausgebildet sein können.

Das Metall kann bevorzugt Eisen, Mangan und/oder Aluminium sein. Besonders gute Sorptionsergebnisse wurden mit Eisen-Sauerstoff-Verbindungen, insbesondere mit Eisen-Oxiden und/oder Eisen-Hydroxiden, gemessen.

Die genaue chemische Formel bzw. chemische Struktur der Eisen-Oxide und/oder Eisen-Hydroxide kann dabei variieren und kann sich über die Einsatzdauer des Filtersubstrats 1 und/oder des Filterbodens 3 verändern.

Bei der Anreicherung der Oberfläche der Schluffkörner mit Metall-Sauerstoff-Verbindungen kann beispielsweise Ferrihydrit gebildet werden, welches als FeₛO₃(OH)₉, also als Eisen-Oxid-Hydroxid, oder als 5Fe₂O₃ · 9H₂O, also hydratisiertes Eisenoxid, bezeichnet werden kann.

Dieses Ferrihydrit kann sich über die Einsatzdauer des Filtersubstrats 1 und/oder des Filterbodens 3 in andere Oxide, Hydroxide und/oder Oxihydroxide, insbesondere zu Goethit, also α-FeOOH, umwandeln, wobei alle diese Umwandlungen als Eisen-Sauerstoff-Verbindungen, insbesondere als Eisen-Oxide und/oder Eisen-Hydroxide, bezeichnet werden können.

Sofern anstatt Eisen andere Metalle bei der oberflächlichen Anreicherung verwendet werden, so kann auch von Metall-Sauerstoff-Verbidnungen, Metall-Oxiden und/oder MetallHydroxiden gesprochen werden. Insbesondere sind in diesem Sinne unter der Bezeichnung Aluminium-Sauerstoff-Verbindungen oder Mangan-Sauerstoff-Verbindungen, AluminiumOxide und/oder Aluminium-Hydroxide bzw. Mangan-Oxide und/oder Mangan- Hydroxide zu verstehen.

Vorteilhafterweise kann das feinkörnige Material zusätzlich zu den Schluffkörnern Tonkörner und/oder Sandkörner umfassen.

Vorteilhafterweise ermöglicht das Filtersubstrat 1 die eingangs genannten Vorteile und vorteilhaften Wirkungen. Insbesondere kann mit dem Filtersubstrat 1 ein Filterboden 3 zur Sorption von in Wasser gelösten Schwermetallen gebildet werden, wobei vorgesehen ist, dass zwischen 0,3 Masseprozent und 18 Masseprozent des Filterbodens 3 mit Metall-Sauerstoff-Verbindungen angereicherte Schluffkörner sind. Dadurch kann ein hoher Prozentsatz der im Wasser gelösten Schwermetalle immobilisiert werden.

Vorteilhaft kann ein pH-Wert des Filterbodens 3 zwischen 6 und 8 sein, welcher die Sorption der Schwermetalle begünstigen kann.

Der Filterboden 3 kann dabei einfach und kostengünstig hergestellt werden. Insbesondere kann der Filterboden 3 Vor-Ort, also am Bestimmungsort der Verwendung des Filterbodens 3, hergestellt werden. Dadurch können Transportkosten des Filterbodens 3 gering sein und der Filterboden 3 kann zur Ausbildung der obersten Bodenschicht 36 im Bereich einer Verkehrsfläche 4 verwendet werden. Derart kann der Filterboden 3 zur Ausbildung einer oberirdischen Versickerungsfläche, insbesondere als Regenwasser-Sickeranlage und/oder als Verkehrsflächenabwasser-Sickeranlage, ausgebildet sein.

Die Verkehrsfläche 4 kann als jegliche Fläche mit öffentlichen und/oder privaten Verkehrsaufkommen, insbesondere als Fahrbahn, Fahrweg, Straße, Gleiskörper, Parkplatz, Parkweg, Gehweg, Hafengelände, Stadion und/oder Landebahn, ausgebildet sein, wobei Gehen, Laufen von Personen sowie insbesondere Fahren von Personen mit Fahrzeugen vom Verkehrsaufkommen umfasst sind. Auch stehende Fahrzeuge zählen in diesem Zusammenhang, beispielsweise bei der als Parkplatz ausgebildeten Verkehrsfläche 4, zum Verkehrsaufkommen. Die Fahrzeuge können einspurig, beispielsweise Fahrräder und Motorräder, oder mehrspurig, beispielsweise Automobile und Flugzeuge, ausgebildet sein. Der Filterboden 3 kann benachbart an die Verkehrsfläche 4 angrenzen und/oder kann unterhalb der Verkehrsfläche 4 angeordnet sein. In beiden Fällen ist der Filterboden 3 als Flächenversickerung, also als Bereich flächiger Oberflächenausdehnung nach oben hin, ausgebildet.

Ebenso kann der Filterboden 3 in einer Muldenversickerung verwendet werden, wobei der zur Versickerung ausgebildete Bereich eine Mulde, beispielsweise einen Graben neben dem Parkplatz, der Fahrbahn, dem Fahrweg und/oder der Straße, ausbildet.

Insbesondere können wenigstens 80 Masseprozent des feinkörnigen Materials Schluffkörner sein. Dadurch kann das Filtersubstrat 1 besonders gut mit Metall-Sauerstoff-Verbindungen angereichert werden.

Insbesondere kann vorgesehen sein, dass das feinkörnige Material Schotterwaschschlamm 2 ist. Schotterwaschschlamm 2 ist in diesem Zusammenhang ein Reststoff beim Waschen von Sand, Kies, Schotter, Feinstein, Mittelstein, Geröll und/oder Grobstein, also von Körnern mit einem Äquivalentdurchmesser zwischen 0,05mm und 200mm, und kann im Wesentlichen insbesondere aus besonders feinkörnigem Material, also aus feinkörnigem Material mit einem hohen Anteil von Schluffkörnern, ausgebildet sein. Bevorzugt beträgt dabei der Anteil an Schluffkörnern über 80 Masseprozent, besonders bevorzugt über 90 Masseprozent. Derart sind über 80 Masseprozent, besonders bevorzugt über 90 Masseprozent, des Schotterwaschschlamms 2 Schluffkörner. Die verbleibenden Masseprozente des Schotterwaschschlamms 2 sind bevorzugt Tonkörner und/oder Sandkörner, können jedoch auch Verunreinigungen, beispielsweise das organische Material, und Körner mit Korngrößen eines Äquivalentdurchmessers von über 2mm umfassen.

Das Filtersubstrat 1 im Filterboden 3 sowie der Filterboden 3 sind zur Sorption von im Wasser gelösten Schwermetallen vorgesehen. Die Schwermetalle können dabei als gebundene Metalle, als gelöste Metalle und/oder als Metall-Komplexe auftreten. Die Schwermetalle im Wasser können Kadmium Cd, Kupfer Cu, Blei Pb, Zink Zn, Chrom Cr und/oder Nickel Ni sein. Das Wasser kann ebenso mit Natrium und Chlor, beispielsweise aus Streusalzen stammend, belastet sein. Die Schwermetalle und/oder die Streusalze werden üblicherweise vom Wasser, beispielsweise vom Regenwasser, aufgenommen, welches die Verkehrsfläche 4 durchdringt oder an dieser entlang läuft, und kann dadurch mit Schwermetallen sowie Streusalzen belastet sein. Mit Schwermetallen und/oder Streusalzen belastetes Wasser, insbesondere Wasser, welches durch die Verkehrsfläche 4 durchgetreten und/oder an dieser entlang gelaufen ist, wird im weiteren als Verkehrsflächenabwasser 5 bezeichnet.

Das Verkehrsflächenabwasser 5 kann durch den Filterboden 3 mit einer vorbestimmbaren Sickergeschwindigkeit durchsickern. Die Sickergeschwindigkeit kann mit der Einheit Millimeter pro Stunde, Meter pro Sekunde oder mit der Einheit Wassermenge pro Fläche pro Stunde angegeben werden und ist die Geschwindigkeit, mit welcher das Wasser, insbesondere das Verkehrsflächenabwasser 5 im Filterboden 3, insbesondere schwerkraftbedingt und/oder kapillarwirkungsbedingt, fließt. Die Sickergeschwindigkeit kann in Anlehnung an die Ö-Norm B 2506-1 bestimmt werden.

Die Sickergeschwindigkeit kann in diesem Zusammenhang als k_{f}-Wert bezeichnet werden, welcher üblicherweise in der Einheit m/s angegeben wird.

Die Sickergeschwindigkeit ist dabei stark von der Zusammensetzung und von der Korngrößenverteilung des Filterbodens 3 abhängig. Typische Sickergeschwindigkeiten, also k_{f}-Werte, sind für Sand 10⁻⁵m/s bis 10⁻³m/s, für Schluff 10⁻⁸m/s bis 10⁻⁴m/s und für Ton 10⁻¹¹m/s bis 10⁻⁹m/ₛ.
Durch die Zusammensetzung des Filterbodens 3 kann die Sickergeschwindigkeit in vorteilhafterweise vorbestimmt und/oder eingestellt werden. Um eine ausreichend schnelle Versickerung gewährleisten sowie die überdurchschnittliche Ausbildung von Wasserlacken verhindern zu können, hat für Regenwasser-Sickeranlagen, also für Anlagen im Bereich von Verkehrsflächen, welche zur Aufnahme des Regenwassers und des Verkehrsflächenabwassers 5 vorgesehen sind, wobei der erfindungsgemäße Filterboden 3 bevorzugt zur Ausbildung einer derartigen Regenwasser-Sickeranlagen vorgesehen sein kann, der k_{f}-Wert größer als 10⁻⁵m/s zu sein.
Die Fig. 1 zeigt schematisch auch ein erstes, besonders bevorzugtes, Verfahren einer Herstellung des Filtersubstrats 1, bei welchem Schotterwaschschlamm 2 mit Eisen-Oxid und/oder Eisen-Hydroxid derart angereichert wird, dass die Körner des Schotterwaschschlamms 2 mit Eisen-Oxid und/oder Eisen-Hydroxid ummantelt werden.
Bei dem ersten Verfahren wird der Schotterwaschschlamm 2 in einen Mischbehälter 15 gefüllt und dort mit einer ersten Lösung 11 und einer zweiten Lösung 12 versetzt, wobei je einem kg Schotterwaschschlamm 2 zumindest zwei Liter, insbesondere zwischen 3 Liter und 7 Liter, bevorzugt um 5 Liter, Lösung, also Summe aus erster Lösung 11 und zweiter Lösung 12, zugesetzt werden, wodurch eine Mischung 14 erzeugt wird.
Die erste Lösung 11 ist dabei ein Metallfluorid, Metallchlorid und/oder ein Metallbromid, bevorzugt ein Metallchlorid. Das Metall der ersten Lösung kann vorteilhafterweise Eisen, Mangan und/oder Aluminium, insbesondere Eisen, sein. Bevorzugt ist die erste Lösung 11 eine 0,01molare bis 0,1molare, besonders bevorzugt eine 0,05molare, Eisen(II)-Clorid-Lösung. Die zweite Lösung ist dabei eine Natriumlösung, insbesondere eine Natriumhydrogencarbonat-Lösung, bevorzugt eine 0,02molare bis 0,2molare, besonders bevorzugt eine 0,1 molare, Natriumhydrogencarbonat-Lösung.
Die Mischung 14 aus Schotterwaschschlamm 2, erster Lösung 11 und zweiter Lösung 12 wird im Mischbehälter 15 zumindest sechs Stunden, insbesondere zwischen 12 Stunden und 30 Stunden, bevorzugt um 24 Stunden, mit einem Gas 13, insbesondere mit Luft, durchspült. Dabei reagieren die erste Lösung 11 und die zweite Lösung 12 miteinander und mit dem Schotterwaschschlamm 2 und die den Schotterwaschschlamm 2 ausbildenden Körner, insbesondere die Schluffkörner, werden an deren Oberfläche mit als Eisen-Oxid und/oder als Eisen-Hydroxid ausgebildeten Metall-Sauerstoff-Verbindungen angereichert.

Die dabei übrig bleibende Mischung 14 wird aus dem Mischbehälter entfernt und, insbesondere in einem Ofen 16, bei niedriger Temperatur, insbesondere zwischen 30°C und 120°C, bevorzugt zwischen 40°C und 80°C, besonders bevorzugt zwischen 45°C und 60°C, getrocknet. Die getrocknete Mischung 14 bildet das, vorerst jedoch salzige, Filtersubstrat 1 aus und kann nach einem Entsalzen verwendet, insbesondere in Bodenmaterial 31 eingebracht bzw. in dieses Bodenmaterial 31 eingebaut, werden.

Derart kann der Eisen-Oxid- und/oder Eisen-Hydroxid-Gehalt des Schotterwaschschlamms 2 um in etwa 12000mg/kg erhöht werden, wobei beispielsweise ein ursprünglicher Eisen-Oxid-und/oder Eisen-Hydroxid-Gehalt des Schotterwaschschlamms 2 von in etwa 6000 mg/kg auf in etwa 18000mg/kg erhöht werden kann.

Die Werte des Eisen-Oxid- und/oder Eisen-Hydroxid-Gehalts des Schotterwaschschlamms 2 wurden dabei im Dithionit-Extrakt bestimmt. Der Dithionit-Extrakt liefert den Eisen-Oxid-und/oder Eisen-Hydroxid-Gehalt des Schotterwaschschlamms 2, wobei aber die in den Körnern des Schotterwaschschlamms 2 gebundenen Eisen-Oxide und/oder Eisen-Hydroxide nicht erfasst werden. Derart wird im Wesentlichen lediglich der Eisen-Oxid- und/oder Eisen-Hydroxid-Gehalt des Schotterwaschschlamms 2 an der Oberfläche dessen Körner bestimmt. Die Bestimmung des Aluminium-Oxid-Gehalts, des Mangan-Oxid-Gehalts, des Aluminium-Hydroxid-Gehalts und/oder des Mangan-Hydroxid-Gehalts kann ebenfalls mit dem Dithionit-Extrakt oder mittels entsprechenden Extrakten bestimmt werden.

Da die Anreicherung des Eisen-Oxid- und/oder Eisen-Hydroxid-Gehalts des Schotterwaschschlamms 2 auf der Oberfläche der Körner erfolgt, kann diese auch als Ummantelung der Körner, insbesondere der Schluffkörner, bezeichnet werden, wobei sowohl eine vollständige als auch eine bereichsweise Ummantelung der Oberfläche der Körner auftreten kann.

Vorteilhafterweise kann dabei vorgesehen sein, dass wenigstens 60 Masseprozent der Schluffkörner mit Eisen-Oxiden und/oder Eisen-Hydroxiden angereichert sind. Dadurch kann die Sorption von Schwermetallen besonders begünstigt werden.

Anschließend wird der Überstand der Lösung abgezogen und die Mischung 14 mit salzarmen und/oder hochreinem Wasser versetzt und gemischt, insbesondere geschüttelt, womit die bei der Reaktion entstandenen Salze gelöst und bei der Trennung dieses mit den bei der Reaktion entstandenen Salzen angereicherten Wassers von der Mischung entfernt werden. Das salzarme und/oder das hochreine Wasser kann durch Deionisation, Demineralisation, Destillation, Umkehrosmose, welche auch als Reversosmose bekannt ist, hergestellt sein.

Dieses Filtersubstrat 1 kann in einer Spüleinrichtung 17 nochmalig, insbesondere mittels eines Spülwassers 18, gespült werden und anschließend nochmalig getrocknet werden. Das Spülwasser kann dabei als Leitungswasser oder bevorzugt als Wasser gemäß dem vorhergehenden Absatz ausgebildet sein.

Bei weitem, nicht dargestellten, Verfahren kann vorgesehen sein, dass wenigstens 60 Masseprozent der Schluffkörner mit den Metall-Sauerstoff-Verbindungen angereichert sind. Insbesondere kann vorgesehen sein, dass 80 Masseprozent der Metall-Sauerstoff-Verbindungen ein Eisenoxid oder ein Eisenhydroxid sind, wobei Eisenoxid, insbesondere Eisen(II)-Oxid sowie Eisen(III)-Oxid, und Eisenhydroyxid, insbesondere Eisen(II)-Hydroxid sowie Eisen(III)-Hydroxid, eine besonders hohe Sorption der Schwermetalle ermöglichen kann.

Die Fig. 2 zeigt auch ein bevorzugtes Verfahren zur Herstellung des Filterbodens 3, wobei das erfindungsgemäße Filtersubstrat 1 in Bodenmaterial 31 eingebracht und mit diesem vermischt wird.

Besonders bevorzugt können bei dem bevorzugten Verfahren zur Herstellung zwischen einem Teil und 30 Teilen Filtersubstrat 1 mit zwischen 99 Teilen und 70 Teilen Bodenmaterial 31 zu 100 Teilen Filterboden 3 in einen Mischer 33 eingebracht werden und vermischt werden, womit zwischen 0,3 Masseprozent und 18 Masseprozent des Filterbodens 3 mit Metall-Sauerstoff-Verbindungen angereicherte Schluffkörner sind. Durch die mit Metall-Sauerstoff-Verbindungen angereicherte Schluffkörner kann der Filterboden 3 die Sorption von im Verkehrsflächenabwasser 5 gelösten Schwermetallen gewährleisten.

Mittels des Dithionit-Extrakts kann auch der Eisen-Oxid- und/oder Eisen-Hydroxid-Gehalt des Filterbodens 3 bestimmt werden. Insbesondere kann mittels des Dithionit-Extrakts die Anreicherung des Eisen-Oxid- und/oder Eisen-Hydroxid-Gehalts des Filterbodens 3 gegenüber dem Bodenmaterial 31 bestimmt werden. Ebenfalls kann mittels des Dithionit-Extrakts auch die Bestimmung, insbesondere die Anreicherung gegenüber dem Wert des Dithionit-Extrakts des puren Bodenmaterials 31, des Aluminium-Oxid-Gehalts, des Mangan-Oxid-Gehalts, des Aluminium-Hydroxid-Gehalts und/oder des Mangan-Hydroxid-Gehalts des Filterbodens 3 durchgeführt werden.

Das Bodenmaterial 31 kann als terrestrischer Boden, als semiterrestrischer Boden, als semisubhydrischer Boden, als subhydrischer Boden und/oder als Moorboden ausgebildet sein. Bevorzugt kann das Bodenmaterial 31 auch als Mischung einer dieser Böden mit einem weiteren dieser Böden, sowie, meist in geringen Mengen, Verunreinigungen umfassen.

Insbesondere kann als weiterer Boden ein Strandboden, ein Sandboden, insbesondere ein Quarzsandboden, sein, wobei bevorzugt in etwa zwei Teile vom Boden mit einem Teil vom weiteren Boden gemischt werden. Der weitere Boden kann dabei vorteilhafterweise auch kalkhaltig ausgebildet sein, wodurch die Einstellung eines pH-Wertes des Bodenmaterial 31 und insbesondere des Filterbodens 3 im neutralen Bereich, also im Bereich zwischen pH-Wert 6 und und pH-Wert 8, begünstigt ist. Der pH-Wert des Filterbodens 3 zwischen sechs und acht kann die Sorption der Schwermetalle verbessernd beeinflussen.

Vorteilhafterweise kann der pH-Wert durch Zugabe von dazu geeignetem Material auf den neutralen Bereich eingestellt werden. Dazu können zu diesem Zweck in der Landwirtschaft verwendete Materialien wie CaCO₃, also Kalk, Ca(OH)₂, also Calciumhydroxid, und/oder CaO, also Calciumoxid, verwendet werden. Ebenso hat sich im Zusammenhang mit Schotterwaschschlamms 2 die pH-Werteinstellung mittels unbehandelter Holzasche als vorteilhaft erwiesen, insbesondere als zuverlässig, einfach und kostengünstig durchführbar. Zur Einstellung des pH-Wertes des Filterbodens 3 kann der Bedarf - in Abhängigkeit des Filterbodens 3 - des dazu jeweilig verwendeten Materials bestimmt werden.

Besonders bevorzugt kann - wie in der Fig. 2 dargestellt - vorgesehen sein, dass der für eine Einstellung des pH-Wertes des Filterbodens 3 zwischen sechs und acht benötigte Kalk 34 bestimmt und durch Kalkung 32 eingestellt wird, wobei der benötigte Kalk 34 mittels der Kalkung 32 in den Filterboden 3 eingebracht wird.

Das Verkehrsflächenabwasser 5 kann in den Filterboden 3 einsickern und im Filterboden 3 insbesondere mit vorbestimmter Sickergeschwindigkeit nach unten sickern.

Im Filterboden 3 können die Schwermetalle zu einem hohen Prozentsatz immobilisiert werden, wobei das Verkehrsflächenabwasser 5 gefiltert, also als Sickerwasser 6 mit geringer Schwermetallbelastung, aus dem Filterboden 3, insbesondere unterhalb des Filterbodens 3 und nach unten hin, austritt.

Der Filterboden 3 kann - an dessen Einsatzort - vorteilhafterweise eine Schichthöhe, also eine Höhenerstreckung, von 0,3m bis 2m aufweisen, wobei die Sickergeschwindigkeit derart ausgebildet sein kann, dass der Filterboden 3 zwischen 30 Minuten und vier Stunden mit dem Verkehrsflächenabwasser 5 wechselwirken kann. Derart können die Schwermetalle zu einem besonders hohen Prozentsatz immobilisiert werden.

Die Fig. 3 und 4 zeigen vorteilhafte Verwendungen des erfindungsgemäßen Filtersubstrats 1 und/oder des erfindungsgemäßen Filterbodens 3 zur Sorption von in Wasser gelösten Schwermetallen für die oberste Bodenschicht 36 im Bereich einer Verkehrsfläche 4. Dabei ist unter der obersten Bodensicht 36 eine untere Bodenschicht 37 ausgebildet, welche insbesondere Erdreich, Schotter und/oder Gestein umfassen kann. Diese untere Bodenschicht 37 kann auch als unveränderte Bodenschicht bei einer Herstellung der Verkehrsfläche 4 ausgebildet sein, also im ursprünglichen Zustand verbleiben.

Die Fig. 3 zeigt eine vorteilhafte erste Verwendung eines Filterbodens 3. In dieser ersten Verwendung umfasst die oberste Bodenschicht 36 ein Bodenmaterial 31, also einen herkömmlichen Boden, einen Filterboden 3 und einen eine Fahrbahn 41 stützenden Stützboden 35. Der Filterboden 3 ist dabei angrenzend neben der die Verkehrsfläche 4 ausbildenden Fahrbahn 41 angeordnet. Im Fall der ersten Verwendung kann das Verkehrsflächenabwasser 5 insbesondere ein Fahrbahnabwasser oder ein Straßenabwasser sein.

Bei einer vorteilhaften Weiterbildung der ersten Verwendung kann der Stützboden 35 ebenfalls als Filterboden 3 ausgebildet sein. Dadurch kann durch die Fahrbahn 41 durchsickerndes Verkehrsflächenabwasser 5 ebenfalls mit dem Filterboden 3 gefiltert werden. Die Fig. 4 zeigt ein zweites Verwendungsbeispiel eines Filterbodens 3. Die Verkehrsfläche 4 ist im zweiten Verwendungsbeispiel als Parkplatz ausgebildet, wobei eine Parkplatzoberfläche 41 Pflastersteine und/oder Gittersteine umfasst, wobei der Filterboden 3 zwischen den Pflastersteinen und/oder den Gittersteinen sowie unterhalb der Pflastersteine und/oder der Gittersteine angeordnet ist und dabei den Stützboden 35 für die Parkplatzoberfläche 41 ausbilden kann. Das Verkehrsflächenabwasser 5 dringt, insbesondere sickert, von oben kommend unmittelbar in den Filterboden 3 ein, und verweilt in diesem für eine vorbestimmte Zeit, womit auch hierbei die Schwermetalle zu einem hohen Prozentsatz immobilisiert werden können.

Bei einer weiteren vorteilhaften Ausbildung der Verkehrsfläche 4, beispielsweise die Parkplatzoberfläche 41, kann die Verkehrsfläche 4 im Wesentlichen aus Kies und/oder Schotter ausgebildet sein, wobei der Filterboden 3 ebenfalls unterhalb der Verkehrsfläche 4 und/oder angrenzend benachbart zur Verkehrsfläche 4 ausgebildet sein kann und dabei zumindest bereichsweise als Stützboden 35 ausgebildet sein kann. Auch hierbei kann in die Verkehrsfläche 4einsickerndes Verkehrsflächenabwasser 5 zum Filterboden vordringen, in diesen einsickern und/oder durch diesen hindurchsickern.

Insbesondere kann die Sickergeschwindigkeit im Filterboden 3 gleich groß bis etwas größer, insbesondere 0% bis 25% größer, bevorzugt 0% bis 10% größer, als die Sickergeschwindigkeit im Bodenmaterial 31 und/oder im Stützboden 35 ausgebildet sein.

Derart kann gewährleistet sein, dass das Verkehrsflächenabwasser 5 nicht um den Filterboden 3 herumläuft, sondern durch diesen durchsickert und an dessen Unterseite, als das gefilterte Sickerwasser 6 wieder austritt. Dabei kann der Filterboden 3 über eine Breite zwischen 0,5m und 2m angrenzend an die Fahrbahn sowie mit einer Schichthöhe zwischen 0,3m bis 2m angeordnet sein. Derart kann gewährleistet sein, dass ein Großteil, insbesondere über 90%, des Verkehrsflächenabwassers 5 in den Filterboden 3 eingeleitet wird.

Bei den vorteilhaften und bevorzugten Verwendungen können Pflanzen, insbesondere Gräser, Blumen, Sträucher und/oder Bäume, in den Filterboden 3 eingepflanzt sein. Dadurch, dass das der Filterboden 3 mehrheitlich Bodenmaterial 31 umfasst, kann eine Beeinträchtigung des Pflanzenwachstums verhindert werden. Bei einer vorbestimmten Pflanzenart kann diese Pflanzenart - durch die Sorption der Schwermetalle des Verkehrsflächenabwassers 5 im Filterboden 3 - auch lediglich gering mit Schwermetallen belastet werden, wobei die Belastung mit Schwermetallen der im Filterboden 3 eingepflanzten Pflanze dieser Art geringer ist, als die Belastung mit Schwermetallen der im Bodenmaterial 31 ohne Filtersubstrat 1 eingepflanzten Pflanze der gleichen Art unter gleichen sonstigen Bedingungen.. Derart kann der Filterboden 3 insbesondere im Bereich der Fahrbahntrennung zwischen den beiden Fahrtrichtungen einer Autobahn ausgebildet sein, wobei die Fahrbahntrennung einen Pflanzenbewuchs, insbesondere Gräser und Sträucher, aufweist.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Filtersubstrat (1) zur Sorption von in Wasser gelösten Schwermetallen, aus feinkörnigem Material, **dadurch gekennzeichnet, dass** wenigstens 60 Masseprozent des feinkörnigen Materials Schluffkörner sind, und dass zumindest ein Teil der Schluffkörner wenigstens bereichsweise an deren Oberfläche mit Metall-Sauerstoff-Verbindungen angereichert ist.

2. Filtersubstrat nach einem der Ansprüche 1 bis 4, **dadurch gekennzeichnet, dass** wenigstens 60 Masseprozent der Schluffkörner mit den Metall-Sauerstoff-Verbindungen angereichert sind.

3. Filtersubstrat nach Anspruch 1 oder 2, **dadurch gekennzeichnet, dass** die Metall-Sauerstoff-Verbindungen Metalloxide und/oder Metallhydroxide sind.

4. Filtersubstrat nach Anspruch 1, 2 oder 3, **dadurch gekennzeichnet, dass** das Metall der Metall-Sauerstoff-Verbindungen Eisen, Mangan und/oder Aluminium ist.

5. Filtersubstrat nach einem der Ansprüche 1 bis 4, **dadurch gekennzeichnet, dass** 80 Masseprozent der Metall-Sauerstoff-Verbindungen Eisenoxide und/oder Eisenhydroxide sind.

6. Filtersubstrat nach einem der Ansprüche 1 bis 5, **dadurch gekennzeichnet, dass** das feinkörnige Material zusätzlich zu den Schluffkörnern Tonkörner und/oder Sandkörner umfasst.

7. Filtersubstrat nach einem der Ansprüche 1 bis 6, **dadurch gekennzeichnet, dass** wenigstens 80 Masseprozent des feinkörnigen Materials Schluffkörner sind.

8. Filtersubstrat nach einem der Ansprüche 1 bis 7, **dadurch gekennzeichnet, dass** das feinkörnige Material Schotterwaschschlamm (2) ist.

9. Filterboden (3) zur Sorption von in Wasser gelösten Schwermetallen, umfassend Bodenmaterial (31), **gekennzeichnet dadurch, dass** zwischen 0,3 Masseprozent und 18 Masseprozent des Filterbodens (3) mit Metall-Sauerstoff-Verbindungen angereicherte Schluffkörner sind.

10. Filterboden (3) nach Anspruch 9, **gekennzeichnet durch** einen pH-Wert zwischen 6 und 8.

11. Verfahren zur Herstellung eines Filterbodens (3) zur Sorption von in Wasser gelösten Schwermetallen, **dadurch gekennzeichnet, dass** ein Filtersubstrat (1) nach einem der Ansprüche 1 bis 8 in ein Bodenmaterial (31) eingebracht und mit diesem vermischt wird.

12. Verfahren nach Anspruch 11, **dadurch gekennzeichnet, dass** zwischen einem Teil und 30 Teilen Filtersubstrat (1) mit zwischen 99 Teilen und 70 Teilen Bodenmaterial (31) vermischt wird.

13. Verfahren nach Anspruch 11 oder 12, **dadurch gekennzeichnet, dass** zu einer Einstellung eines ph-Wertes des Filterbodens (3) zwischen sechs und acht benötigtes CaC0₃, CaO, Ca(OH)₂ und/oder benötigte unbehandelte Holzasche in das Bodenmaterial (31) eingebracht und mit diesem vermischt wird.

14. Verfahren nach Anspruch 11, 12 oder 13, **dadurch gekennzeichnet, dass** ein für die Einstellung des ph-Wertes des Filterbodens (3) zwischen sechs und acht benötigte Kalk (34) bestimmt und dieser ph-Werte zwischen sechs und acht durch Kalkung (32) eingestellt wird.

15. Verwendung eines Filtersubstrats (1) nach einem der Ansprüche 1 bis 8 und/oder eines Filterbodens (3) nach Anspruch 9 oder 10 zur Sorption von in Wasser gelösten Schwermetallen in einer obersten Bodenschicht (36) im Bereich einer Verkehrsfläche.
